# EUROPÄISCHE PATENTANMELDUNG

(11) **EP 1 541 494 A1**
(43) Veröffentlichungstag der Anmeldung: **15.06.2005**
(21) Anmeldenummer: 04025623.2
(22) Anmeldetag: 28.10.2004
(51) Int. Cl.: B65D 77/20, B65D 3/22

(54) **Kombidose mit hermetischem und peelbarem Verschluss**

(30) Priorität: 10.12.2003 DE 10358094
(71) Anmelder: Alcan Deutschland Holdings GmbH & Co. KG, 90431 Nürnberg (DE)
(72) Erfinder: Wieber, Ulrich, 79336 Hebolzheim (DE)
(74) Vertreter: Cohausz & Florack

(57) **Zusammenfassung**

Die Erfindung betrifft eine Kombidose (1) mit einem mantelförmigen Dosenkörper (2), wobei der Dosenkörper (2) zur Abdichtung des durch den Dosenkörper (2) gebildeten Innenraumes einen innenliegenden Liner (3) aufweist und mindestens eine Öffnung des mantelförmigen Dosenkörpers (2) durch eine peelbare Membran (4) verschlossen ist sowie ein Verfahren zur Herstellung einer entsprechenden Kombidose. Die Aufgabe, eine Kombidose zur Verfügung zu stellen, welche, insbesondere bei hohen Innendrücken, bei hoher Aroma- und Gasdichtigkeit ein leichtes Öffnen der Kombidose ermöglicht, wird dadurch gelöst, dass zumindest die peelbare Membran (4) mindestens eine heißsiegelfähige und peelbare Extrusionsbeschichtung (22) aufweist.

## Beschreibung

Die Erfindung betrifft eine Kombidose mit einem mantelförmigen Dosenkörper, wobei der Dosenkörper zur Abdichtung des durch den Dosenkörper gebildeten Innenraumes einen innenliegenden Liner aufweist und mindestens eine Öffnung des mantelförmigen Dosenkörpers durch eine peelbare Membran verschlossen ist.

Kombidosen werden vorwiegend zur Verpackung von trockenen Füllgütern, insbesondere Lebensmitteln, eingesetzt. Die Kombidose besteht dabei zumeist aus einem mantelförmigen Dosenkörper aus Karton, dessen Innenraum durch eine innenliegende Deckschicht, dem sogenannten Liner, gegen das Eindringen von beispielsweise Gasen, Wasserdampf, Aromen oder Mikroorganismen durch den außenliegenden Karton hindurch geschützt ist. Kopf- und bodenseitig weist die Kombidose eingesiegelte Membrane auf, welche den von dem mantelförmigen Dosenkörper eingeschlossenen Innenraum verschließen. Um das Öffnen der Kombidosen zu erleichtern, ist zumeist kopfseitig eine peelbare Membran vorgesehen, so dass das Öffnen der Kombidose ohne Zerstörung des Liners oder der Membran selbst durchgeführt werden kann.

Es hat sich jedoch gezeigt, dass Kombidosen mit einer peelbaren Membran hinsichtlich der Haltbarkeit von in derartigen Kombidosen verpackten Produkten nachteilig sind, da die peelbar auf- oder eingesiegelte Membran aufgrund der beim Heißsiegeln eingesetzten heißsiegelfähigen Lacke nicht ausreichend aroma- und/oder gasdicht ist. Eine lange Haltbarkeit und Frische des Füllgutes sowie eine hohe Widerstandsfähigkeit bei hohen Innendrücken (größer 1 bar), welche insbesondere bei der Verpackung von Lebensmitteln unter Stickstoffatmosphäre auftritt, konnte bisher nur mit nicht peelbaren Membranen erreicht werden. Nicht peelbare Membrane lassen sich jedoch nur schwierig, zumeist nur durch Zerstörung der Membran, öffnen.

Ausgehend von diesem Stand der Technik liegt der vorliegenden Erfindung die Aufgabe zugrunde, eine Kombidose zur Verfügung zu stellen, welche, insbesondere bei hohen Innendrücken, bei hoher Aroma- und Gasdichtigkeit ein leichtes Öffnen der Kombidose ermöglicht sowie ein Verfahren zur Herstellung einer entsprechenden Kombidose vorzuschlagen.

Gemäß einer ersten Lehre wird die oben hergeleitete und aufgezeigte Aufgabe für eine Kombidose dadurch gelöst, dass zumindest die peelbare Membran mindestens eine heißsiegelfähige und peelbare Extrusionsbeschichtung aufweist.

Beim Auf- und/oder Einsiegeln der peelbaren Membran auf oder in den Liner wird durch die heißsiegelfähige und peelbare Extrusionsbeschichtung eine hermetisch dichte Heißsiegelnaht mit dem Liner hergestellt, welche sich durch Peelen leicht öffnen lässt. Die bei der Verwendung von peelbaren, heißsiegelfähigen Lacken die Dichtigkeit negativ beeinflussende Kanülenbildung kann hierdurch effektiv verhindert werden, ohne das Öffnungsverhalten der Kombidose zu verschlechtern. Durch den hermetischen Verschluss der Membran mit dem Liner bzw. Dosenkörper kann eine lange Haltbarkeit und Frische des Füllgutes auch bei hohen Innendrücken gewährleistet werden, wobei gleichzeitig die peelbare Membran leicht und kontrollierbar zu öffnen ist.

Da der den Dosenkörper auskleidende Liner im allgemeinen ebenfalls Heißsiegelnähte aufweist, kann die Gasdichtigkeit der Kombidosen dadurch weiter gesteigert werden, dass der Liner eine heißsiegelfähige Extrusionsbeschichtung aufweist. Aufgrund der hohen Gasdichtigkeit sind die erfindungsgemäßen Kombidosen auch für stark hygroskopische Füllgüter oder für den Einsatz in tropischen Klimazonen geeignet.

Die Extrusionsbeschichtung kann kostengünstig an die Verarbeitungsbedingungen beim Füllen und Verschließen der erfindungsgemäßen Kombidose, beispielsweise an die jeweiligen Verarbeitungstemperaturen, dadurch angepasst werden, dass die Extrusionsbeschichtung des Liners und/oder der peelbaren Membran aus einem thermoplastischen Material, insbesondere einem Polyolefin oder einem Blend verschiedener Polyolefine besteht. Durch diese Maßnahme kann eine hohe Gasdichtigkeit der Kombidose nahezu unabhängig von den Verarbeitungsbedingungen gewährleistet werden. Polyolefine sind besonders konstengünstige thermoplastische Materialien mit über weite Bereiche einstellbaren mechanischen, physikalischen und chemischen Eigenschaften. Vorzugsweise wird Low-density-Polyethylen (LDPE) oder High-Density-Polyethylen (HDPE) für die Extrusionsbeschichtung eingesetzt. Darüber hinaus können aber auch andere Polyolefine wie beispielsweise Polypropylen, Polystyrol oder Polybutene verwendet werden. Bei der Verwendung eines Blendes aus verschiedenen Polyolefinen können die unterschiedlichen Eigenschaften verschiedener Polyolefine miteinander kombiniert und eine weiter verbesserte Anpassung der Extrusionsbeschichtung erreicht werden.

Weist die Extrusionsbeschichtung zusätzlich Terpolymere, Ionomere, Ethylen-Co-Acrylsäure (EAA) und/oder Ethylmaleinsäure (EMA) als Blend oder in Form einer coextrudierten Schicht auf, können die Eigenschaften der Extrusionsbeschichtung im Hinblick auf die Transparenz, Zähigkeit, Elastizität und/oder Hafteigenschaften weiter verbessert werden.

Gemäß einer weitergebildeten Ausführungsform kann das Siegelverhalten der Extrusionsbeschichtung ferner dadurch verbessert werden, dass die Extrusionsbeschichtung anorganische Füllstoffe aufweist. Beispielsweise kann als Füllstoff Calciumcarbonat verwendet werden, welcher die Viskosität der beim Heißsiegeln aufgeschmolzenen Extrusionsbeschichtung vergrößert, da Calciumcarbonat beim Siegeln nicht aufschmilzt. Hierdurch wird erreicht, dass der Siegelprozess insbesondere bezüglich der Siegeltemperaturen stabilisiert wird und eine gleichmäßige, hermetisch dichte Siegelnaht erzielt werden kann.

Gemäß einer nächsten vorteilhaften Ausführungsform weist der Liner und/oder die peelbare Membran mindestens eine Papierschicht auf, so dass einerseits der Liner leicht mit dem Dosenkörper aus Karton verklebt werden kann und andererseits die Membran werbewirksam bedruckbar ist.

Besonders gute Barriereeigenschaften des Liners und/oder der peelbaren Membran gegen Gase, Wasserdampf, Aromen, Licht und Mikroorganismen können dadurch gewährleistet werden, dass der Liner und/oder die Membran mindestens eine Aluminiumsperrschichtfolie aufweisen.

Um beim Öffnen der Kombidose ein Einreißen der peelbaren Membran zu verhindern, weist die peelbare Membran, gemäß einer weitergebildeten Ausführungsform, mindestens eine Schicht bestehend aus einer Polyesterfolie auf.

Die Herstellung der Kombidose kann dadurch weiter vereinfacht werden, dass die peelbare Membran eine mit der Membran einstückige Lasche zum Öffnen der Kombidose aufweist. Hierdurch kann die Lasche bereits beim Ausstanzen der Membran hergestellt werden, so dass das nachträgliche Aufsiegeln einer Lasche zum Öffnen der Kombidose entfällt.

Vorzugsweise weist der Liner eine Anakondanaht auf, so dass zur Herstellung des Dosenkörpers beispielsweise das kontinuierliche Spiralwickel-Verfahren genutzt werden kann. Bei dem Spiralwickel-Verfahren wird zunächst bandförmiges Linermaterial um einen rotierenden Körper, welcher die Form des späteren Dosenkörpers bestimmt, spiralförmig und sich überlappend gewickelt, wobei sich der aus Linermaterial gebildete Mantel ständig verlängert und auf Länge zugeschnitten wird. Vor dem Zuschnitt wird der Mantel aus Linermaterial, beispielsweise ebenfalls mit dem Spiralwickel-Verfahren, mit einem den Dosenkörper bildenden Karton umwickelt bzw. beklebt.

Im Überlappungsbereich des spiralförmig gewickelten Liners wird der radial innenliegende Teil des Liners einseitig um 180° nach außen umgebogen, so dass sich die extrusionsbeschichteten Seiten des Liners im Überlappungsbereich berühren. Beim Heißsiegeln der Überlappungsbereiche des Liners kann mit Hilfe der heißsiegelfähigen Extrusionsbeschichtung eine hermetisch dichte Heißsiegelnaht, welche als Anakondanaht bezeichnet wird, gebildet werden. Werden die entsprechenden Bereiche des bandförmigen Linermaterials unmittelbar vor dem Aufwickeln erhitzt, kann bereits beim Aufwickeln des Liners um den rotierenden Körper kontinuierlich eine spiralförmig verlaufende Anakondanaht mit hoher Prozesssicherheit hergestellt werden.

Darüber hinaus kann die Gasdichtigkeit der Kombidose dadurch weiter gesteigert werden, dass die peelbare Membran und/oder die Bodenmembran einen Bördelrand aufweist. Mit Hilfe des Bördelrandes wird die mit der Extrusionsbeschichtung des Liners in Kontakt stehende Fläche der peelbaren Membran bzw. der Bodenmembran vergrößert, so dass insgesamt eine vergrößerte Abdichtfläche der Heißsiegelnaht zur Verfügung steht und eine höhere Dichtigkeit der Heißsiegelnaht erreicht wird.

Gemäß einer zweiten Lehre der vorliegenden Erfindung wird die oben hergeleitete und aufgezeigte Aufgabe verfahrensmäßig dadurch gelöst, dass ein Liner und eine peelbare Membran unter Verwendung des Heißsiegelverfahrens miteinander versiegelt werden, wobei zumindest die peelbare Membran mindestens eine heißsiegelfähige und peelbare Extrusionsbeschichtung aufweist. Wie oben bereits dargelegt, führt das Versiegeln der extrusionsbeschichteten peelbaren Membran mit einem Liner zu einem hermetisch dichten Verschluss der Kombidose, welcher darüber hinaus leicht zu öffnen ist. Die nach dem erfindungsgemäßen Verfahren hergestellten Kombidosen gewährleisten damit, selbst bei hohen Innendrücken, einerseits eine lange Haltbarkeit von darin gelagerten Produkten und andererseits ein leichtes Öffnen der Kombidose.

Gemäß einer weitergebildeten Ausführungsform kann das erfindungsgemäße Verfahren zur Herstellung einer Kombidose dadurch vereinfacht werden, dass der Liner über eine Anakondanaht versiegelt wird und die Anakondaversiegelung unter Verwendung von Heißluftdüsen erfolgt. Dabei ermöglicht die Anakondanaht einerseits den Einsatz des kontinuierlichen Spiralwickel-Verfahrens zur Herstellung des Dosenköpers. Andererseits gewährleisten die Heißluftdüsen eine hohe Prozesssicherheit bei der Anakondaversiegelung durch ein berührungsloses Erhitzen mittels Konvektion der zu versiegelnden Bereiche des Liners.

Es gibt nun eine Vielzahl von Möglichkeiten, die erfindungsgemäße Kombidose sowie das Verfahren zur Herstellung einer Kombidose weiterzubilden und auszugestalten. Hierzu wird beispielsweise einerseits verwiesen auf die den Patentansprüchen 1 und 8 nachgeordneten Patentansprüche und andererseits auf die Beschreibung eines Ausführungsbeispiels in Verbindung mit der Zeichnung. In der Zeichnung zeigt
- Fig. 1: in einer perspektivischen, explosionsartigen Seitenansicht ein Ausführungsbeispiel einer erfindungsgemäßen Kombidose mit einem kreiszylindrischen Dosenkörper,
- Fig. 2: in einer Schnittansicht den Schichtaufbau des Liners des Ausführungsbeispiels,
- Fig. 3: in einer Schnittansicht den Schichtaufbau der peelbaren Membran des Ausführungsbeispiels sowie
- Fig. 4: ebenfalls in einer Schnittansicht die Anakondanaht des Liners des Ausführungsbeispiels.

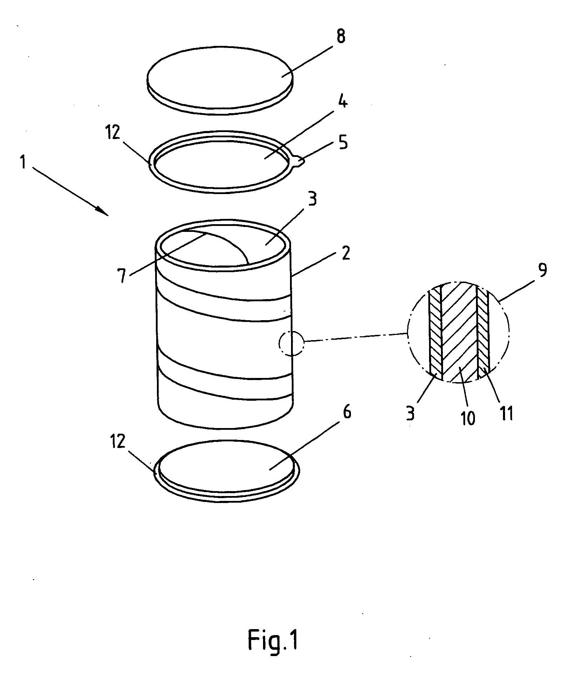

Die Fig. 1 zeigt eine Kombidose 1 mit einem Dosenkörper 2, welcher einen zur Abdichtung des Dosenkörpers 2 innenliegenden Liner 3 aufweist und durch die peelbare Membran 4 sowie die Bodenmembran 6 verschließbar ist. In dem vorliegenden Ausführungsbeispiel sind sowohl der Liner (3) als auch die peelbare Membran (4) extrusionsbeschichtet. Durch die extrusionsbeschichtete peelbare Membran 4 und den extrusionsbeschichteten Liner 3 kann unter Verwendung des Heißsiegelverfahrens ein peelbarer und hermetischer Verschluss mit hoher Aroma- und Gasdichtigkeit erreicht werden. Zur Erzielung einer hohen Aroma- und Gasdichtigkeit der Kombidose 1 muss selbstverständlich auch die Bodenmembran 6 mit dem Liner 3 hermetisch verschlossen werden. Dazu kann die Bodenmembran 6 prinzipiell auch extrusionsbeschichtet sein. Da die Bodenmembran 6 jedoch im allgemeinen nicht zum Öffnen der Kombidose 1 verwendet wird, können auch nicht peelbare, eine hohe Aroma- und Gasdichtigkeit gewährleistende Heißsiegellacke eingesetzt werden.

Zur Vereinfachung der Herstellung der Kombidose 1 kann die peelbare Membran 4 eine angestanzte Lasche 5 zum Öffnen der Kombidose 1 aufweisen. Darüber hinaus zeigt Fig. 1 die im Dosenkörper 2 innenliegende Anakondanaht 7 des Liners 3, welche bei der Verwendung des Spiralwickel-Verfahrens zur Herstellung des Liners 3 des Dosenkörpers 2 bzw. bei seiner Versiegelung des Liners 3 erzeugt wird. Zum Wiederverschließen der Kombidose 1 nach dem Öffnen der peelbaren Membran 4 dient ein Kunststoffdeckel 8.

Der vergrößerte Ausschnitt 9 zeigt in einer Schnittansicht den Schichtaufbau des Dosenkörpers 2. Wie der Ausschnitt 9 zeigt, besteht der Dosenkörper 2 aus einem innenliegenden Liner 3 und einem den eigentlichen Dosenkörper 2 bildenden Karton 10, auf welchem ein außenliegendes Etikett 11 aufgeklebt ist.

Zur Verbesserung der Dichtigkeit der Kombidose 1 weisen sowohl die peelbare Membran 4 als auch die Bodenmembran 6 einen Bördelrand 12 auf, welcher zu einer vergrößerten Dichtfläche zwischen dem Liner 3 und der peelbarer Membran 4 bzw. der Bodenmembran 6 beim Verschließen der Kombidose 1 durch Heißsiegeln führt.

Zur Aufbewahrung trockener Füllgüter, insbesondere Lebensmittel, müssen der Liner 3, die peelbare Membran 4 und die Bodenmembran 6 gute Barriereeigenschaften hinsichtlich Gase, Wasserdampf, Aromen etc. aufweisen. Daher bestehen der Liner 3, die peelbare Membran 4 und die Bodenmembran 6 aus einem entsprechende Barriereeigenschaften aufweisenden Verbundmaterial.

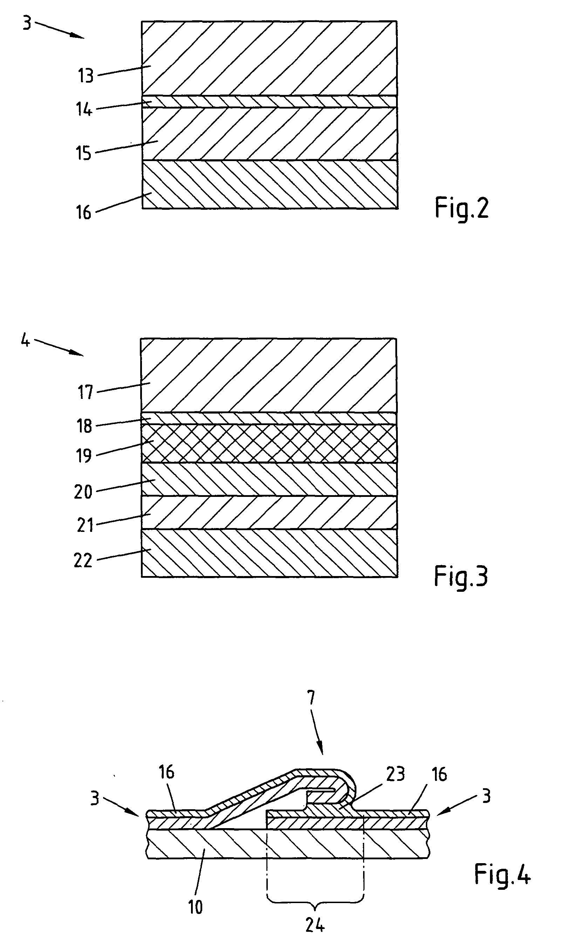

In Fig. 2 ist in einer Schnittansicht der Schichtaufbau des Verbundmaterials des Liners 3 des Ausführungsbeispiels dargestellt. Außenliegend weist der Liner 3 eine Papierschicht 13, beispielsweise eine Kraftpapierschicht mit 50 g/m², auf, welche zur Verklebung mit dem Karton 10 des Dosenkörpers 2 dient. Die Aluminiumsperrschichtfolie 15 weist zur besseren Anbindung an die Papierschicht 13 eine Polyethylen-Kaschierung 14 auf. Vorzugsweise wird dabei eine Aluminiumsperrschichtfolie 15 mit einer Dicke von 7 µm verwendet, welche neben ausreichenden Barriereeigenschaften auch bei der Herstellung des Liners 3 gut verarbeitbar ist. Anschließend folgt die innenliegende heißsiegelfähige Extrusionsbeschichtung 16, welche vorzugsweise aus einem Polyolefin, beispielsweise LDPE oder HDPE, oder einem Blend verschiedener Polyolefine aufgebaut ist. Zur Verbesserung der physikalischen und/oder chemischen Eigenschaften, beispielsweise bei der Verarbeitung, der peelbaren Membran oder des Liners, kann die Extrusionsbeschichtung (16) zusätzlich Terpolymere, Ionomere, EAA und/oder EMA in Form eines Blends oder einer zusätzlichen coextrudierten Schicht aufweisen.

Fig. 3 zeigt in einer Schnittansicht den Schichtaufbau der peelbaren Membran 4 des Ausführungsbeispiels aus Fig. 1. Die peelbare Membran 4 besteht dabei aus einer außenliegenden Papierschicht 17, beispielsweise bestehend aus Kraftpapier mit 40 g/m², so dass die peelbare Membran 4 bedruckbar ist. Im Unterschied zum Schichtaufbau des Liners 3 weist die peelbare Membran 4 zur Erhöhung der Reißfestigkeit eine Polyesterfolienschicht 19 auf, deren Dicke beispielsweise 13 µm beträgt. Zur Anbindung der Polyesterfolienschicht 19 an die Papierschicht 17 dient eine lösungsmittelfreie Kaschierung 18. Die Aluminiumfoliensperrschicht 21, welche beispielsweise eine Dicke von 9 µm aufweist, wird über eine EAA-Schicht 20 mit beispielsweise 13 bis 16 g/m², die gleichzeitig als Weichmacher der Polyesterfolie 19 dient, angebunden. Die EAA-Schicht 20 bewirkt dabei ferner, dass die peelbare Membran 4 angenehm in der Hand liegt und nicht sperrig wirkt. Schließlich weist die peelbare Membran 4 noch eine heißsiegelfähige und peelbare Extrusionsbeschichtung 22 auf, welche beispielsweise in Verbindung mit der Extrusionsbeschichtung 16 des Liners 3 einen hermetischen aber peelbaren Verschluss der Kombidose 1 ermöglicht.

Das in Fig. 2 und Fig. 3 dargestellte Verbundmaterial des Liners 3 und der peelbaren Membran 4 stellt dabei nur ein Ausführungsbeispiel des Linermaterials oder des Materials der peelbaren Membran einer erfindungsgemäßen Kombidose dar. Der Aufbau des Verbundmaterials des Liners 3 sowie der peelbaren Membran 4 kann, bis auf die innenliegende Extrusionsbeschichtung 16 bzw. 22, abhängig vom Anwendungsfall variieren.

Eine Schnittansicht einer Anakondanaht 7 des Liners 3 des Ausführungsbeispiels zeigt die Fig. 4. Zur Ausbildung eines geschlossenen Liners 3 im Dosenkörpers 2, wird der zunächst bandförmige Liner 3 um einen dem Dosenkörper 2 entsprechenden Körper gewickelt, wobei sich Teile des Liners 3 im Überlappungsbereich 24 überlappen. Dies kann beispielsweise mit Hilfe des Spiralwickel-Verfahrens erreicht werden. Im Überlappungsbereich 24 wird der radial innenliegende Bereich des Liners 3 um 180° nach außen umgebogen, so dass die Extrusionsbeschichtung 16 des Liners 3 aufeinander liegen. Der umgebogene Bereich des Liners 3 wird während des Wickelvorganges erhitzt, so dass die heißsiegelfähige Extrusionsbeschichtung 16 eine Heißsiegelnaht 23 ausbildet. Der spiralförmige Verlauf der Heißsiegelnaht 23 wird dann als Anakondanaht 7 bezeichnet. Der in Fig. 4 dargestellte Karton 10 des Dosenkörpers 2 kann nach der Ausbildung der Anakondanaht 7 auf den Liner 3 beispielsweise mittels Leim aufgeklebt werden. Dabei kann ebenfalls das Spiralwickel-Verfahren angewandt werden. Neben dem Spiralwickel-Verfahren stehen jedoch auch andere alternative Verfahren zur Herstellung des mantelförmigen Dosenkörpers 2, wie beispielsweise das Parallel- oder das Längswickelverfahren, zur Verfügung.

## Patentansprüche

1. Kombidose (1) mit einem mantelförmigen Dosenkörper (2), wobei der Dosenkörper (2) zur Abdichtung des durch den Dosenkörper (2) gebildeten Innenraumes einen innenliegenden Liner (3) aufweist und mindestens eine Öffnung des mantelförmigen Dosenkörpers (2) durch eine peelbare Membran (4) verschlossen ist,
**dadurch gekennzeichnet, dass** zumindest die peelbare Membran (4) mindestens eine heißsiegelfähige und peelbare Extrusionsbeschichtung (22) aufweist.

2. Kombidose nach Anspruch 1,
**dadurch gekennzeichnet, dass** der Liner (3) eine heißsiegelfähige Extrusionsbeschichtung (16) aufweist.

3. Kombidose nach Anspruch 1 oder 2,
**dadurch gekennzeichnet, dass** die Extrusionsbeschichtung des Liners (3) und/oder der peelbaren Membran (4) aus einem thermoplastischen Material, insbesondere einem Polyolefin oder einem Blend verschiedener Polyolefine, besteht.

4. Kombidose nach Anspruch 3,
**dadurch gekennzeichnet, dass** die Extrusionsbeschichtung (16,22) zusätzlich Terpolymere, Ionomere, Ethylen-Co-Acrylsäure (EAA) und/oder Ethylmaleinsäure (EMA) als Blend oder in Form einer coextrudierten Schicht aufweist.

5. Kombidose nach einem der Ansprüche 1 bis 4,
**dadurch gekennzeichnet, dass** die Extrusionsbeschichtung (16,22) anorganische Füllstoffe aufweist.

6. Kombidose nach einem der Ansprüche 1 bis 5,
**dadurch gekennzeichnet, dass** der Liner (3) und/oder die peelbare Membran (4) mindestens eine Papierschicht (13, 17) aufweisen.

7. Kombidose nach einem der Ansprüche 1 bis 6,
**dadurch gekennzeichnet, dass** der Liner (3) und/oder die peelbare Membran (4) mindestens eine Aluminiumsperrschichtfolie (15, 21) aufweisen.

8. Kombidose nach einem der Ansprüche 1 bis 7,
**dadurch gekennzeichnet, dass** die peelbare Membran (4) mindestens eine Schicht bestehend aus einer Polyesterfolie (19) aufweist.

9. Kombidose nach einem der Ansprüche 1 bis 8,
**dadurch gekennzeichnet, dass** die peelbare Membran (4) eine mit der peelbaren Membran (4) einstückige Lasche (5) zum Öffnen der Kombidose (1) aufweist.

10. Kombidose nach einem der Ansprüche 1 bis 9,
**dadurch gekennzeichnet, dass** der Liner (3) eine Anakondanaht (7) aufweist.

11. Kombidose nach einem der Ansprüche 1 bis 10,
**dadurch gekennzeichnet, dass** die peelbare Membran (4) und/oder die Bodenmembran (6) einen Bördelrand (12) aufweist.

12. Verfahren zur Herstellung einer Kombidose, insbesondere einer Kombidose nach einem der Ansprüche 1 bis 11,
**dadurch gekennzeichnet, dass** ein Liner und eine peelbare Membran unter Verwendung des Heißsiegelverfahrens miteinander versiegelt werden, wobei zumindest die peelbare Membran mindestens eine heißsiegelfähige und peelbare Extrusionsbeschichtung aufweisen.

13. Verfahren zur Herstellung einer Kombidose nach Anspruch 12,
**dadurch gekennzeichnet, dass** der Liner über eine Anakondanaht versiegelt wird und die Anakondaversiegelung unter Verwendung von Heißluftdüsen erfolgt.
